# EUROPEAN PATENT APPLICATION

(11) **EP 1 785 817 A2**
(43) Date of publication of application: **16.05.2007**
(21) Application number: 06123253.4
(22) Date of filing: 31.10.2006
(51) Int. Cl.: G06F 3/033, G06F 3/00

(54) **External operation signal recognition system of a mobile communication terminal**

(30) Priority: 02.11.2005 KR 20050104633
(71) Applicant: Samsung Electronics Co., Ltd., Suwon-si, Gyeonggi-Do (KR)
(72) Inventor: Byun, Joon-Ho, c/o Samsung Electronics Co., Ltd., Suwon-si, Gyeonggi-do (KR); Kim, Min-Seok, c/o Samsung Electronics Co., Ltd., Suwon-si, Gyeonggi-do (KR)
(74) Representative: Grünecker, Kinkeldey, Stockmair & Schwanhäusser Anwaltssozietät

(57) **Abstract**

Provided is an external operation signal recognition system of a mobile communication terminal which includes an external operation signal generation apparatus separate form the mobile communication terminal for generating synch and operation signals ; and an external operation signal recognition apparatus for receiving the synch signal, sensing the external operation signal through at least three operation signal sensing units, generating three dimensional (3D) coordinates corresponding to a position of the external operation signal generation apparatus using the received synch signal and the sensed external operation signal, and realizing the external operation signal using the generated 3D coordinates. Accordingly, a user can easily operate a 3D application without directly moving the mobile communication terminal.

## Description

The present invention relates generally to an external operation signal recognition system, and in particular, to an external operation signal recognition system of a mobile communication terminal.

Currently, the development of application software technology has resulted in the expansion of the development of three dimensional (3D) applications realizing 3D games and virtual realities in mobile communication terminals.

When a 3D application executes, for example, in a mobile communication terminal, a user usually performs an operation using a key input device such as a keypad or a touch panel. For example, the user moves a character in a game in a desired direction by using preset operation key(s) (e.g., top/bottom/left/right). In addition, the user controls the character in the game to perform a desired action by pressing a preset key. However, when the key input device is used, an operation signal for controlling a 3D character cannot be appropriately input. For example, when the user plays a racing game using a mobile communication terminal, the user can control a directional movement of a character using keys of the keypad. However, since a key of a desired direction is simply selected according to a conventional key input method, it is difficult for the user to easily control a character as desired, and thereby decreasing the user's desired interest in a game.

Recently, a technique of running a 3D application by recognizing motion of a mobile communication terminal through the installation of an acceleration sensor for sensing spatial movement and a terrestrial magnetism sensor for sensing an orientation of the spatial movement in the mobile communication terminal has been developed and used.

However, according to the above-described method, since 3D motion of a mobile communication terminal can be sensed only if a user moves the mobile communication terminal, it is inconvenient when the user runs a 3D application while watching a display status of the mobile communication terminal.

The present invention has been designed to substantially solve at least the above described problems and/or disadvantages and to provide at least the advantages described herein below. Accordingly, the object of the present invention is to provide an external operation signal recognition system of a mobile communication terminal to recognize a 3D application operation using an external signal without moving the mobile communication terminal.

This object is solved by the subject matter of the independent claims.

Preferred embodiments are defined by the subject matter in the dependent claims.

According to an aspect of the present invention, there is provided an external operation signal recognition system of a mobile communication terminal, the system having an external operation signal generation apparatus separate form a mobile communication terminal for generating synch and operation signals ; and an external operation signal recognition apparatus for receiving the synch signal, sensing the external operation signal through at least three operation signal sensing units, generating three dimensional (3D) coordinates corresponding to a position of the external operation signal generation apparatus using the received synch signal and the sensed external operation signal, and realizing the external operation signal using the generated 3D coordinates.

The present invention will become more apparent from the following detailed description when taken in conjunction with the accompanying drawings in which:
FIG. 1 is a block diagram illustrating an external operation signal recognition system of a mobile communication terminal according to the present invention;
FIG. 2 is a perspective view illustrating an arrangement of first to third operation signal sensing units and a synch signal receiver of the mobile communication terminal of FIG. 1 according to the present invention;
FIGS. 3A and 3B illustrate signal waveforms generated by an external operation signal generation apparatus of the mobile communication terminal of FIG. 1 according to the present invention;
FIGS. 4A to 4D illustrate signal waveforms sensed by an external operation signal recognition apparatus of the mobile communication terminal of FIG. 1 according to the present invention;
FIG. 5 illustrates 3D coordinate information generated using a spherical coordinate system according to the present invention; and
FIG. 6 illustrates coordinate information of a Cartesian coordinate system transformed from coordinate information of a spherical coordinate system according to the present invention.

Preferred embodiments of the present invention will be described herein below with reference to the accompanying drawings. In the drawings, the same or similar elements are denoted by the same reference numerals even though they are depicted in different drawings. In the following description, well-known functions or constructions are not described in detail since they would obscure the invention in unnecessary detail.

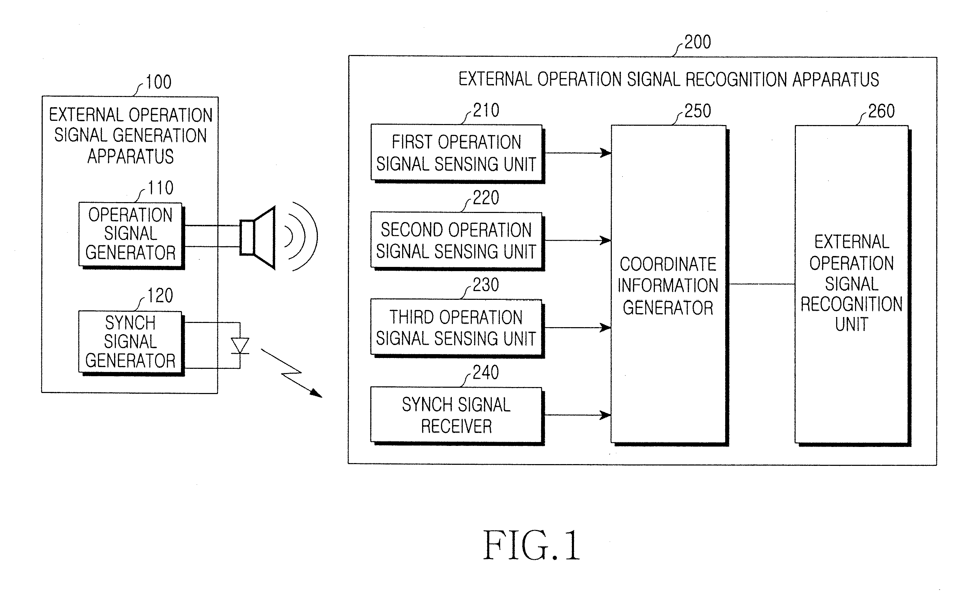

FIG. 1 is a block diagram illustrating an external operation signal recognition system of a mobile communication terminal according to the present invention.

Referring to FIG. 1, the external operation signal recognition system of the mobile communication terminal includes an external operation signal generation apparatus 100 and an external operation signal recognition apparatus 200.

The external operation signal generation apparatus 100 is separately from the mobile communication terminal and includes an operation signal generator 110 and a synch signal generator 120. The operation signal generator 110 and the synch signal generator 120 simultaneously generate signals. The operation signal generator 110 generates a preset operation signal, whereas the synch signal generator 120 generates a preset synch signal.

Herein, a signal having a velocity of light, such as an infrared signal, is used as the synch signal, whereas a signal having a lower velocity than the synch signal, such as an ultrasonic wave signal, is used as the operation signal.

The external operation signal recognition apparatus 200 can be included in the mobile communication terminal and includes a first operation signal sensing unit 210, a second operation signal sensing unit 220, a third operation signal sensing unit 230, a synch signal receiver 240, a coordinate information generator 250, and an external operation signal recognition unit 260.

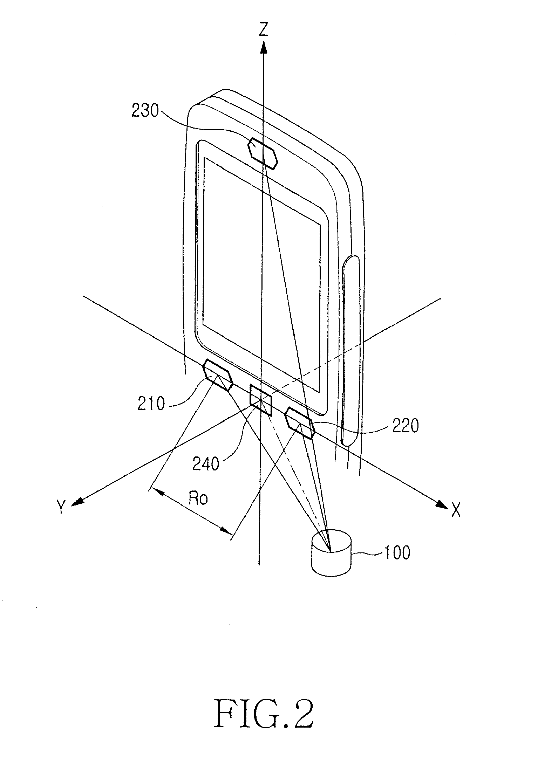

The first to third operation signal sensing units 210, 220, and 230 together with the synch signal receiver 240 can be arranged within the mobile communication terminal. FIG. 2 is a perspective view of the arrangement of the first to third operation signal sensing units 210, 220, and 230 together with the synch signal receiver 240 of the mobile communication terminal according to the present invention. In FIG. 2, the first to third operation signal sensing units 210, 220, and 230 and the synch signal receiver 240 are arranged at a front surface of the mobile communication terminal.

Referring to FIG. 2, the first to third operation signal sensing units 210, 220, and 230 and the synch signal receiver 240 are arranged so that a 3D coordinate system (x, y, z) formed is with the synch signal receiver 240 at the center.

In the present invention, the first and second operation signal sensing units 210 and 220, respectively, are arranged on one axis separated by a distance *R*₀, and the third operation signal sensing unit 230 is arranged on an axis perpendicular to the axis on which the first and second operation signal sensing units 210 and 220 are arranged. The synch signal receiver 240 is arranged in the center between the first and second operation signal sensing units 210 and 220, respectively. The third operation signal sensing unit 230 can be arranged to be separated by the distance *R*₀ from the axis on which the first and second operation signal sensing units 210 and 220 are arranged.

When the first to third operation signal sensing units 210, 220, and 230 and the synch signal receiver 240 are arranged as described above, the 3D coordinate system (x, y, z) can be formed, where the synch signal receiver 240 is the origin, the axis formed by the first and second operation signal sensing units 210 and 220 is an X axis, the axis formed by the synch signal receiver 240 and the third operation signal sensing unit 230 is a Z axis, and an axis perpendicular to the X axis and the Z axis is a Y axis.

The first to third operation signal sensing units 210, 220, and 230, arranged as described herein-above, sense the operation signal generated by the external operation signal generation apparatus 100, and the synch signal receiver 240 receives the synch signal generated by the external operation signal generation apparatus 100.

A time difference occurs between a synch signal arrival time and an operation signal arrival time because the synch signal generated by the external operation signal generation apparatus 100 is transmitted as quickly as the velocity of light while the operation signal is transmitted at a lower velocity than the synch signal. Thus, time differences occur between a synch signal reception time of the synch signal receiver 240 and operation signal sensing times of the first to third operation signal sensing units 210, 220, and 230.

In addition, since the first to third operation signal sensing units 210, 220, and 230 are arranged at different locations, operation signal sensing time differences also occur between the first to third operation signal sensing units 210, 220, and 230.

The time differences between the synch signal reception time of the synch signal receiver 240 and operation signal sensing times of the first to third operation signal sensing units 210, 220, and 230 and the operation signal sensing time differences between the first to third operation signal sensing units 210, 220, and 230 will be described herein below.

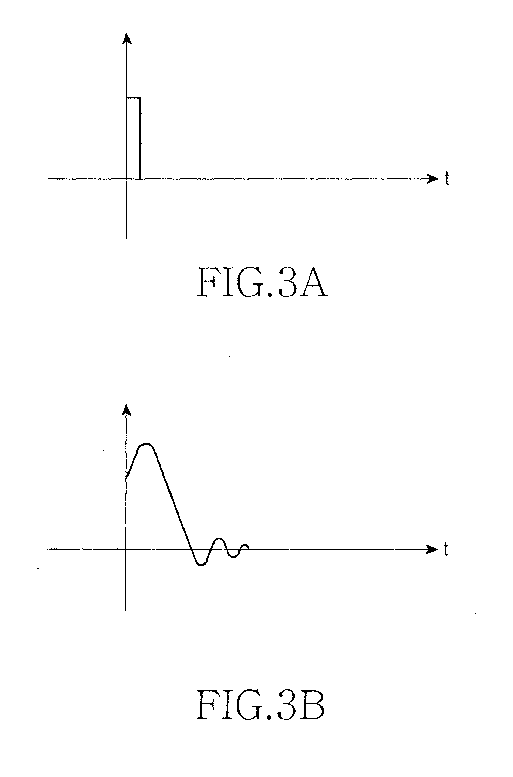

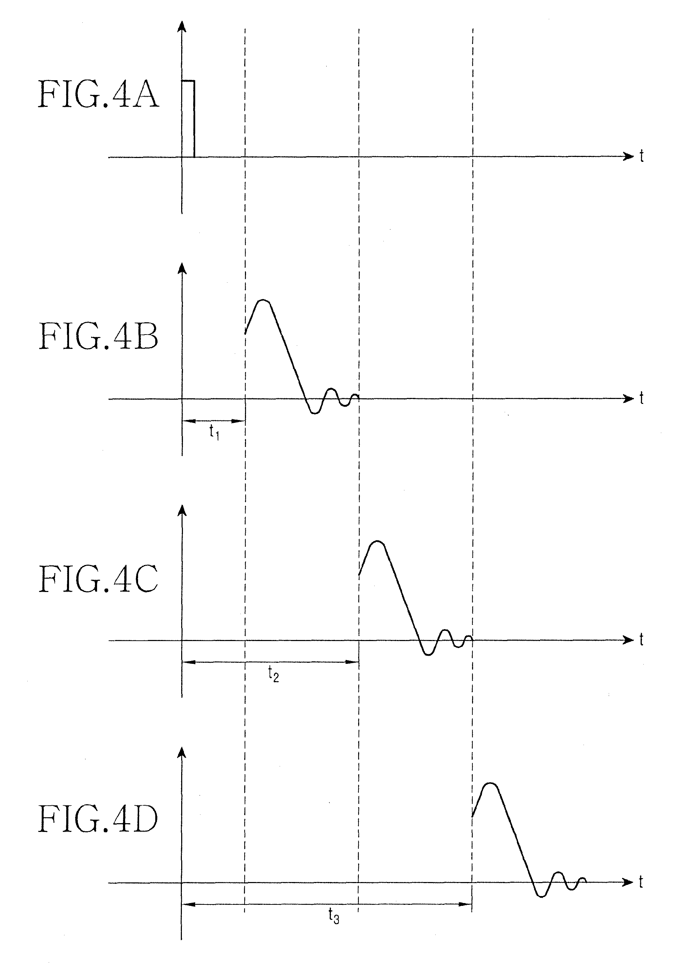

FIGS. 3A and 3B illustrate signal waveforms generated by the external operation signal generation apparatus 100 according to the present invention, and FIGS. 4A to 4D illustrate signal waveforms sensed by the external operation signal recognition apparatus 200 according to the present invention.

Referring to FIGs. 3A and 3B, FIG. 3A illustrates a waveform of the synch signal that is generated by the operation signal generator 110, and FIG. 3B illustrates a waveform of the operation signal that is generated by the synch signal generator 120. Since the synch signal of FIG. 3A is a signal having the same velocity of light, the synch signal is transmitted at a quicker rate.

Since the operation signal of FIG. 3B is a signal having a lower velocity than the synch signal, the operation signal is transmitted at a slower rate. Thus, after the synch signal receiver 240 receives the synch signal of FIG. 3A, each of the first to third operation signal sensing units 210, 220, and 230 senses the operation signal of FIG. 3B. Since the first to third operation signal sensing units 210, 220, and 230 are arranged at different locations, each of the first to third operation signal sensing units 210, 220, and 230 senses the operation signal at a different time depending on its location.

Referring to FIGS. 4A to 4D, FIG. 4A illustrates a waveform of the synch signal received by the synch signal receiver 240 of the external operation signal recognition apparatus 200. FIG. 4B illustrates a waveform of the operation signal sensed by the first operation signal sensing unit 210. FIG. 4C illustrates a waveform of the operation signal sensed by the second operation signal sensing unit 220. FIG. 4D illustrates a waveform of the operation signal sensed by the third operation signal sensing unit 230.

The coordinate information generator 250 generates 3D coordinate information corresponding to a position of the external operation signal generation apparatus 100 using the time differences between the synch signal reception time of the synch signal receiver 240 and the operation signal sensing times of the first to third operation signal sensing units 210, 220, and 230 and the operation signal sensing time differences between the first to third operation signal sensing units 210, 220, and 230.

The coordinate information generator 250 generates 3D coordinate information in a spherical or cylindrical coordinate system using the spherical or cylindrical coordinate system and transforms the generated 3D coordinate information in the spherical or cylindrical coordinate system into a Cartesian coordinate system.

Herein, the Cartesian coordinate system is a coordinate system, which is obtained by adding a Z axis to a XY planar coordinate system, in which a position is presented using coordinates (X, Y, Z). The cylindrical coordinate system is a coordinate system presented using a distance and an angle obtained by projecting a definition point onto an XY plane and a height from the XY plane to the definition point. The spherical coordinate system is a coordinate system presented using a distance from the origin to a position of a definition point, an angle between a line, which is formed by the origin and a point obtained by projecting the definition point on the XY plane, and the X axis, and an angle between a line, which is formed by the origin and the definition point, and the Z axis.

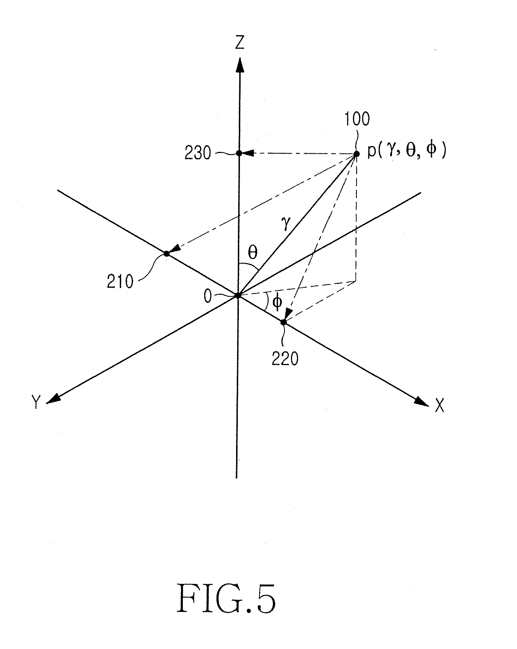

FIG. 5 illustrates 3D coordinate information generated using the spherical coordinate system according to the present invention. Referring to FIG. 5, the coordinate information generator 250 calculates the position of the external operation signal generation apparatus 100 using the time differences between the synch signal reception time of the synch signal receiver 240 and the operation signal sensing times of the first to third operation signal sensing units 210, 220, and 230 and the operation signal sensing time differences between the first to third operation signal sensing units 210, 220, and 230.

The coordinate information generator 250 calculates a distance *r* from the origin *O* to the position of the external operation signal generation apparatus 100, an angle θ between a line, which is formed by the origin *O* and the position of the external operation signal generation apparatus 100, and the Z axis, and an angle φ between a line, which is formed by the origin *O* and a point obtained by projecting the position of the external operation signal generation apparatus 100 on the XY plane, and the X axis.

The coordinate information generator 250 generates 3D coordinate information *P*(*r,θ,φ*) in the spherical coordinate system using *r,* θ, and φ and transforms the generated 3D coordinate information *P*(*r,θ,φ*) in the spherical coordinate system to 3D coordinate information in the Cartesian coordinate system.

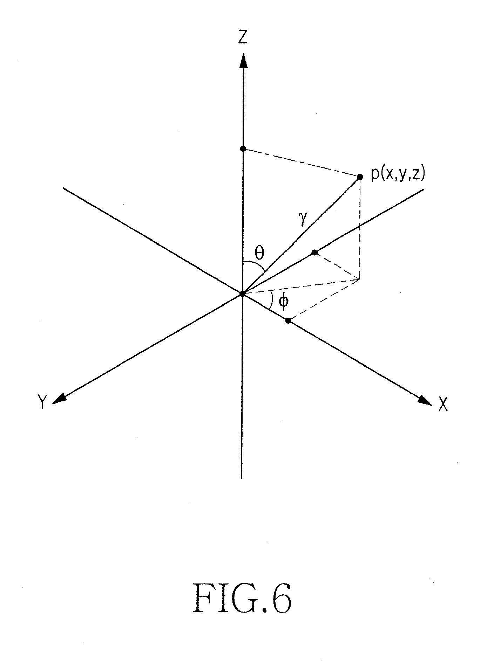

FIG. 6 illustrates coordinate information in the Cartesian coordinate system transformed from coordinate information in the spherical coordinate system according to the present invention. Referring to FIG. 6, the coordinate information generator 250 transforms the 3D coordinate information *P*(*r,θ,φ*) in the spherical coordinate system to *p*(*x,y,z*). Herein, *x = r* sin *θ* cos *φ, y* = *r* sin θ sin φ, and *z* = *r* cosθ.

The transformed 3D coordinate information *p*(*x,y,z*) in the Cartesian coordinate system is input to the external operation signal recognition unit 260.

When the 3D coordinate information in the Cartesian coordinate system is input, the external operation signal recognition unit 260 recognizes an operation signal corresponding to the 3D coordinate information in the Cartesian coordinate system as an operation signal of the mobile communication terminal.

That is, in the external operation signal recognition system according to the present invention, a motion of the external operation signal generation apparatus 100 is generated as 3D coordinates by receiving and sensing a synch signal and an operation signal generated by the external operation signal generation apparatus 100, and the generated 3D coordinates is recognized as an operation signal of the mobile communication terminal.

Using the external operation signal recognition system, an operation signal corresponding to a character input, drawing, or a musical instrument play can be recognized according to a motion of the external operation signal generation apparatus 100 by a user. In addition, using the external operation signal recognition system, different individual handwriting according to a motion of the external operation signal generation apparatus 100 by a user can be recognized and used for security and authentication information.

As described herein-above, according to the present invention, a user can easily operate a 3D application without directly moving a mobile communication terminal. In addition, since the motion of the external operation signal generation apparatus is recognized as an operation signal of the mobile communication terminal, an external operation signal recognition method using the external operation signal generation apparatus is more user-friendly than a conventional operation signal recognition method using a keypad or a touch screen.

Additionally, the user can perform a character input, drawing, or a musical instrument play by moving only the external operation signal generation apparatus, and an external operation signal recognition system can be used for mobile phone security and authentication by utilizing different individual handwriting.

While the invention has been shown and described with reference to a certain preferred embodiments thereof, it will be understood by those skilled in the art that various changes in form and details may be made therein without departing from the scope of the invention as defmed by the appended claims.

## Claims

1. An external operation signal recognition system of a mobile communication terminal, the system comprising:
an external operation signal generation apparatus for generating synch and operation signals, said external operation signal generation apparatus being separate from the mobile communication terminal; and
an external operation signal recognition apparatus for receiving the synch signal, sensing the external operation signal through at least three operation signal sensing units, generating three dimensional coordinates corresponding to a position of the external operation signal generation apparatus using the received synch signal and the sensed external operation signal, and realizing the external operation signal using the generated three dimensional coordinates.

2. The system of claim 1, wherein the mobile communication terminal executes an application according to the external operation signal realization result.

3. The system of claim 1 or 2, wherein the external operation signal generation apparatus comprises:
a synch signal generator for generating the synch signal; and
an operation signal generator for generating the operation signal having a slower transmission rate than the synch signal.

4. The system of one of claims 1 to 3, wherein the external operation signal recognition apparatus comprises:
a synch signal receiver for receiving the synch signal from the external operation signal generation apparatus;
at least three operation signal sensing units, which are arranged at different locations on the mobile communication terminal and sense the operation signal generated by the external operation signal generation apparatus;
a three dimensional coordinate information generator for generating three dimensional coordinates corresponding to a position of the external operation signal generation apparatus using the received synch signal and the sensed operation signals; and
an external operation signal recognition unit for realizing an external operation signal using the generated three dimensional coordinates.

5. The system of claim 4, wherein the three dimensional coordinate information generator calculates a position of the external operation signal generation apparatus using time differences between a synch signal reception time of the synch signal receiver and operation signal sensing times of the at least three operation signal sensing units, and operation signal sensing time differences between the at least three operation signal sensing units

6. The system of claim 4, wherein the three dimensional coordinate information is at least one of coordinate information in a spherical coordinate system, coordinate information in a cylindrical coordinate system, and coordinate information in a Cartesian coordinate system.

7. The system of claim 6, wherein the three dimensional coordinate information generator generates coordinate information in the spherical coordinate system corresponding to a position of the external operation signal generation apparatus and transforms the generated coordinate information in the spherical coordinate system to coordinate information in the Cartesian coordinate system.

8. The system of one of claims 1 to 7, wherein the synch signal transmits at the speed of light, and the operation signal has a lower transmission rate than the synch signal.

9. The system of one of claims 1 to 8, wherein the synch signal is an infrared signal.

10. The system of claim 8 or 9, wherein the operation signal is an ultrasonic wave signal.

11. The system of one of claims 4 to 10, wherein the synch signal receiver and the at least three operation signal sensing units are arranged on the front surface of the mobile communication terminal.

12. The system of claim 11, wherein the at least three operation signal sensing units are arranged in a triangular form, and the synch signal receiver is arranged on an axis formed by two of the at least three operation signal sensing units.
